# EUROPEAN PATENT SPECIFICATION

(11) **EP 0 695 897 B1**
(45) Date of publication and mention of the grant of the patent: **04.07.2001**
(21) Application number: 95305404.6
(22) Date of filing: 02.08.1995
(51) Int. Cl.: F16J 15/08

(54) **Metal gasket for swirl chamber type engines**
Metalldichtung für Motoren mit Wirbelkammer
Joint d'étanchéité métallique pour moteurs munis de chambres de tubulences

(30) Priority: 04.08.1994 JP 20153394
(43) Date of publication of application: 07.02.1996
(73) Proprietor: NIPPON GASKET CO., LTD., Higashiosaka-shi, Osaka fu (JP); TOYOTA JIDOSHA KABUSHIKI KAISHA, Aichi-ken (JP)
(72) Inventor: Inoue, Kunitoshi, Higashiosaka-shi, Osaka-fu 578 (JP); Miura, Masahiko, Kawachinagano-shi, Osaka-fu 586 (JP); Takada, Kazukuni, Ibaragi-shi, Osaka-fu 567 (JP); Yamamoto, Hideo, Castle Miurakaigan 505, Miura-shi, Kanagawa-ken, 238-01 (JP); Katoh, Michio, Yokusuka-shi, Kanagawa-ken, 239 (JP); Hosokawa, Tetsuhiro, Toyota-shi, Aichi-ken, 471 (JP); Shimamura, Hitoshi, Toyota-shi, Aichi-ken, 471 (JP)
(74) Representative: Jenkins, Peter David

(56) References cited:
- EP-A- 0 574 770
- GB-A- 2 073 335
- GB-A- 2 203 805

## Description

This invention relates to a metal gasket provided so as to seal a narrow space between opposed surfaces of a cylinder head and a cylinder block in a swirl chamber type engine having a swirl chamber in the cylinder head.

In a conventional engine, a metal gasket which is provided with beads thereon, and which comprises elastic metal plates, is used between the opposed surfaces of a cylinder head and a cylinder block so as to seal a narrow space therebetween. In the metal gasket, combustion chamber bores are provided in the elastic metal plates constituting base plates, and beads are formed on the portions of these plates which are in the vicinity of the circumferences of these combustion chamber bores. When the metal gasket is interposed between the opposed surfaces of a cylinder head and a cylinder block and fixed by tightening the cylinder head and cylinder block by bolts, the beads provided on the elastic metal plates form annular elastic seals against the portions of the opposed surfaces which are around the combustion chambers bores to seal the inner and outer regions of the same bores.

However, a recently available engine has demanded a higher efficiency and a higher output, and there is a certain type of engine which has been developed so as to meet the demand, and which is provided with swirl chambers as combustion chambers in addition to primary chambers, in which a gaseous mixture is subjected to primary combustion in the swirl chambers and to secondary combustion in the primary chambers. Especially, in a diesel engine, the temperature of the swirl chambers and the portions therearound becomes. high during the driving of the engine, so that a metal gasket necessarily receives high thermal stress. Therefore, it has come to be demanded that a metal gasket which can withstand a high thermal stress condition be developed.

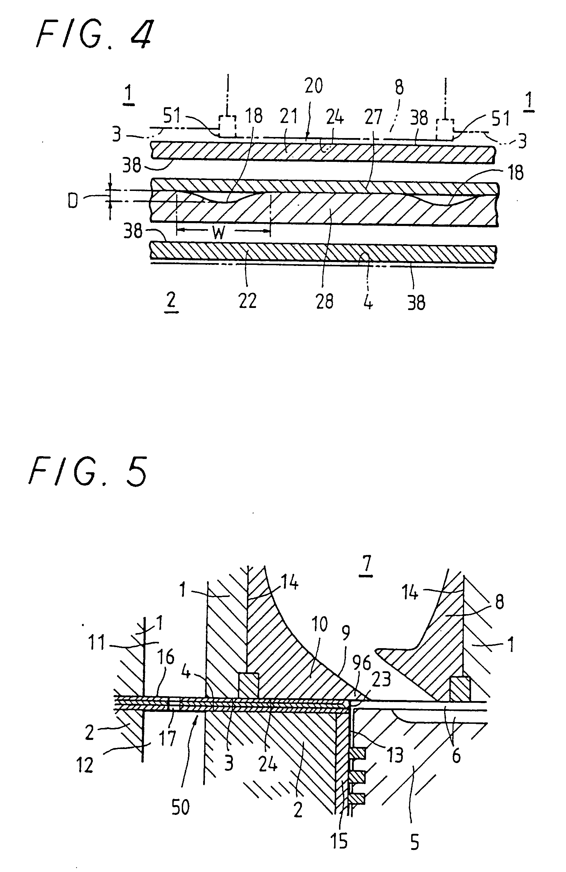

Fig. 5 shows a metal gasket 50 applied to an engine having swirl chambers 7. The metal gasket 50 is interposed between the opposed surfaces 3, 4 of a cylinder head 1 and a cylinder block 2. The metal gasket 50 has coolant contact areas 16 in the positions in which water holes (water jackets and cooling water passages) 11 in the cylinder head 1 and water holes 12 in the cylinder block 2 are opposed to each other, and the coolant contact areas 16 are provided with holes 17 via which the water holes 11, 12 communicate with each other. In the cavities 14 in the cylinder head 1, hot plugs 8 defining the swirl chambers 7 are positioned and fixed. A part of the metal gasket 50 is interposed between bottom surfaces 24 of the hot plugs 8 and the opposed surface 4 of the cylinder block 2. In the bores formed in the cylinder block 2, cylinder liners 15 forming cylinders 13 in which pistons 5 are reciprocatingly moved are fitted. The hot plugs 8 are provided therein with communication ports 9 which establish communication between the primary chambers 6 formed in the cylinders 13 and the swirl chambers 7. The metal gasket 50 has combustion chamber bores 23 correspondingly to the primary chambers 6.

As shown in Fig. 5, out of the bottom surfaces 24 of the hot plugs 8, the communication ports 9 and their circumferential portions face the primary chambers 6, and the remaining crescent-shaped regions contact the metal gasket 50. A combustion gas ejected from the swirl chambers 7 via the communication ports 9 gives heat to bottom portions 10, which define lower portions of the communication ports 9, of the hot plugs 8. Accordingly, especially, in a diesel engine in which the temperature in the combustion chambers becomes high, the temperature of the portions of the metal gasket 50 which are opposed to the bottom surfaces 24 of the hot plugs 8 becomes highest, and these portions are influenced most greatly by the thermal deformation.

In all the drawings to be hereinafter referred to, the combustion chamber bores in a metal gasket are designated by a reference numeral 23, hot plugs 8 and bottom surfaces of the hot plugs 24.

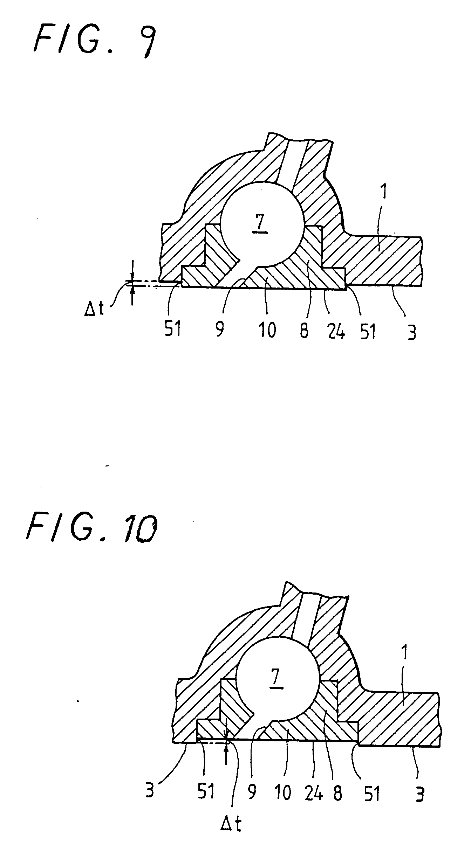

The hot plugs 8 are installed in the cavities 14 in the cylinder head 1. Due to the manufacturing or assembling tolerance of the hot plugs 8 and cylinder head 1, the hot plugs 8 are in some cases press fitted in the cylinder head 1 in such a manner that the bottom surfaces 24 of the hot plugs 8 project slightly from the cylinder block-opposed surface 3 of the cylinder head 1 by a height difference 51 (Δs) as shown in Fig. 9 or recessed slightly from this surface 3 by a height difference 51 (Δt). Even when the bottom surfaces 24 of the hot plugs 8 and the lower surface 3 of the cylinder head 1 are flush with each other at the time of completion of the assembling of the engine, the hot plugs 8 and cylinder head 1 are deformed or the position or posture of the hot plugs 8 in the cylinder head 1 is changed in some cases during a long-term operation of the engine due to a difference between the thermal expansion coefficients of the materials constituting the cylinder head 1 and hot plugs 8. This causes in some cases the bottom surfaces 24 of the hot plugs 8 to project from the opposed surface 3 or retract therein, so that height difference-carrying portions 51 occur at the boundary portions between the opposed surface 3 and the bottom surfaces 24 of the plugs 8. The height differences 51 at the boundary portions between the cylinder head 1 and hot plugs 8 reache as large as 0.05-0.06 mm in some cases during the driving of the engine due to the thermal expansion of the hot plugs 8.

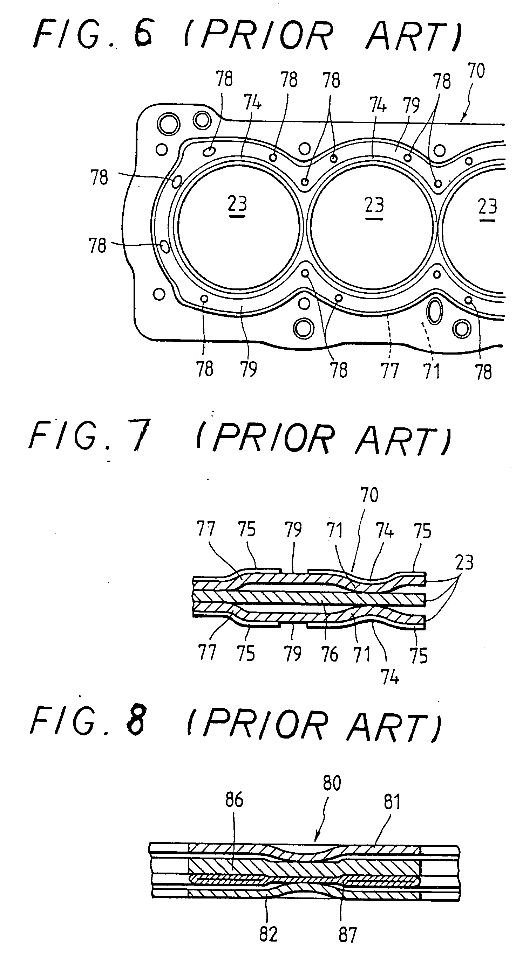

A metal gasket shown in Figs 6 and 7 is known (for example, refer to Japanese Patent Laid-Open No. 73156/1989). A metal gasket 70 comprises two bead plates 71 formed by elastic metal plates having beads 74 extending along the circumferences of combustion chamber bores 23, layers 75 of a heat resisting covering material applied to the surfaces of these bead plates 71, and not less than one intermediate plate (a stopper plate or a regulating plate) 76 interposed between the bead plates 71. The bead plates 71 are provided with water holes 78, which the cooling water contacts, in the portions thereof which are around the beads 74. The heat resisting covering material 75 functions as layers of coating for offsetting the non-flatness of the opposed surfaces 3, 4. The water holes communicating with the cooling water passages in the cylinder head and cylinder block are provided in a belt-like region 79 annularly surrounding the circumferences of the combustion chamber bores 23. The belt-like region 79 as a whole is surrounded by parallel-extending beads 74, 77, whereby this region 79 is sealed so that the cooling water does not leak to the outside thereof. A metal gasket in which one intermediate plate 76 is held firmly between bead plates 71, elastic metal plates so as to easily offset the irregularity of the opposed surfaces of the cylinder head and cylinder block has been proposed.

As shown in Fig. 8, there is a metal gasket 80 comprising a total of four plates, in which two intermediate plates 86, 87 are interposed between bead plates 81, 82 (for example, refer to Japanese Utility Model Laid-Open No. 66457/1992).

When the height difference 51 occurs at the boundary portions between the cylinder block-opposed surface 3 of the cylinder head 1 and the bottom surfaces 24 of the hot plugs 8 as shown in Figs. 12, 13, a tightening force is imparted from the circumferential edge portions of the bores, in which the hot plugs 8 are installed, of the cylinder head 1 when the hot plugs 8 retract in the cylinder head 1 at the height difference-carrying regions, and from the outer circumferential portions of the bottom surfaces of the hot plugs 8 when the hot plugs 8 project from the cylinder head 1 at the height difference-carrying regions, to the surfaces of the bead plates on the metal gasket as a forcible concentrated bead plate surface crushing load. Due to such a concentrated load, stress concentration occurs in the bead plates and intermediate plate. The influence of the stress concentration due to such a hot plug-recessed or hot plug-projecting height difference is the greatest at the portions, at which a shearing force of the height difference-carrying portions 51 works on the metal gasket between these height difference-carrying portions and the upper surface of the cylinder block, i.e. the circumferential edge portions of the combustion chamber bores at which the boundary portions start engaging the metal gasket.

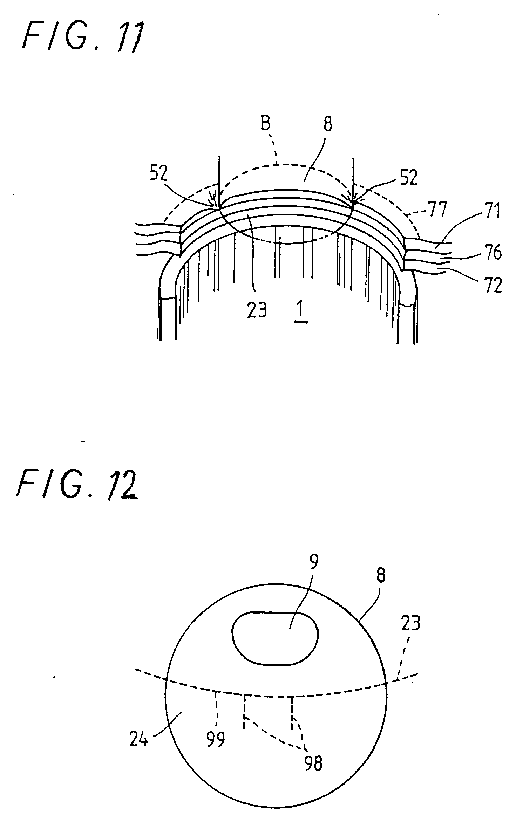

The temperature of the portions of the metal gasket which are opposed to the hot plugs becomes high while the engine is driven, so that the variation of the temperature of these portions becomes great.
Since the material constituting the hot plugs is different from that constituting the cylinder head, a difference between the thermal expansion coefficients thereof also becomes great. Consequently, these portions have high thermal stress and a large influence of metal fatigue occurring due to the repeated stress. These portions receive stress concentration based on the height difference 51 existing before the engine has been driven or a thermal expansion rate of the hot plugs 8 and the height difference 51 increased correspondingly thereto, so that cracks 52 are liable to occur in the direction (shown by the letter "B"), in which the height difference increases, in the parts of the inner circumferential edge portions of the combustion chamber bores 23 which correspond to the boundary portions between the bottom surfaces 24 of the hot plugs 8 and the opposed surface of the cylinder head in the intermediate plate 76 held between the bead plates 71 in the metal gasket 70 as shown in Fig. 11. When cracks 52 have once occurred in the metal gasket 70, a high-temperature combustion gas leaks out into a narrow clearance between the lower surface of the cylinder head and the outer surface of the bead plate 71 in the metal gasket 70 through the cracks 52 since the portions in which the cracks 52 occur are edge portions of the combustion chamber bores 23.

When the metal gasket is interposed between the lower surface of the cylinder head and the upper surface of the cylinder block and tightened, the tightening force is transmitted from the cylinder head-side bead plate to the intermediate plate, cylinder block-side bead plate and cylinder block since the bead plates and intermediate plate are metal plates of a uniform thickness, and this force then reverses as a push-back force to tighten each metal plate. When thermal deformation occurs in a low-rigidity portion 96 of a hot plug 8 after the cylinder head 1 has been tightened to the cylinder block 2 as shown in Fig. 5, the low-rigidity portion 96 turns into a deformed portion 97 projecting toward a bead plate in the metal gasket. On the basis of the results of tests and analyses concerning thermal deformation of a hot plug, it is anticipated that this portion 96 be project-deformed with respect to the bottom surface of the hot plug.
When the thermal deformation amount of the deformed portion 97 projecting toward the bead plate increases, an excessively large force, which is based on the tightening force mentioned above, for crushing the bead plates occurs. The influence of this bead plate pressing force becomes greatest in the portions in which the above-mentioned expansion deformation of the hot plugs works like the force of scissors against the metal gasket between the upper surface of the cylinder block and the metal gasket, i.e. the inner circumferential edge portions of the combustion chamber bores 23.

The temperature of the portions of the metal gasket which are opposed to the hot plugs is liable to become high while the engine is driven, so that the variation of the temperature of these portions becomes great. Since the material constituting the hot plugs is different from that constituting the cylinder head, a difference between the thermal expansion coefficients thereof also becomes great. Consequently, these portions have high thermal stress and a large influence of metal fatigue occurring due to the repeated stress. These portions receive an excessively large load based on the thermal expansion of the hot plugs 8. Therefore, as shown in Fig. 12, cracks 98 extending in the radial direction of the combustion chamber bores 23 are liable to occur in the portions of the bead plates and the intermediate plate therebetween in the metal gasket which correspond to edge portions 99, which constitute boundary portions contacting the bottom surfaces 24 of the hot plugs 8. When cracks 98 have once occurred in the metal gasket, a high-temperature combustion gas leaks out into a narrow space between the opposed surfaces 3, 4 of the cylinder head and cylinder block and the outer surfaces of the bead plates in the metal gasket through the cracks 98 since the portions in which the cracks 98 occur are edge portions 99 of the combustion chamber bores 23.

GB-A-2203805 discloses a cylinder head gasket for sealing of the surface of a mouth plate for an auxiliary combustion chamber in which, for sealing stepped or non-level areas around the mouth plate, beads are arranged in a first uppermost plate which are doubled or tripled over one another thereby providing an elastic action sufficient to reduce deformation and consequent reduction in sealing performance.

GB-A-2073335 discloses a gasket for an internal combustion engine having an auxiliary combustion chamber in which a combustion chamber passage in the cylinder head gasket is enclosed by a metallic border member overlapping the soft material of the cylinder head gasket on both sides and the combustion chamber passage and the border member have a radially outwardly direct extension adjacent the region of and to support a supporting surface of the auxiliary combustion chamber at an edge thereof.

EP-A-0574770 discloses a metallic gasket having at least one intermediate plate between a pair of opposed elastic metal plates having a variety of different folded configurations around the cylinder bore hole.

A primary aim of the present invention is to solve these problems, and provide a metal gasket which is used for a swirl chamber type engine, especially, a diesel engine having hot plugs installed in the cavities in its cylinder head.

The present invention accordingly provides a metal gasket for swirl chamber type engines, interposed in use between a cylinder head provided therein with hot plugs defining an auxiliary chamber and a cylinder block fixed to said cylinder head, which comprises a pair of bead plates of elastic metal formed with combustion chamber bores and beads extending along the circumferential edges of said combustion chamber bores, and intermediate metal plates arranged interposed between said bead plates, characterized in that said intermediate plates are made at areas confronting bottom surfaces of said hot plugs along the combustion chamber bores so as to relax thermal stresses occurring in the gasket owing to thermal expansion of said hot plugs, wherein the areas to relax the thermal stresses are recesses formed in the regions of said intermediate plates which are in edge portions extending along the circumferences of said combustion chamber bores, and which are opposed to boundary portions between said bottom surfaces of said plugs and a lower surface of said cylinder head, whereby said bead plates and the intermediate plates are relieved of stress concentration resulting from said thermal expansion.

In accordance with preferred embodiments of the present invention, even when large thermal expansion deformation occurs in low-rigidity portions of the hot plugs, the deformation does not cause stress concentration ascribed to a difference in the thermal expansion coefficients of different parts to occur in at least the edge portions of combustion chamber bores in the bead plates, i.e., whereby the deformation of the low-rigidity portions do not adversely affect these edge portions, the metal gasket being capable of preventing the occurrence of cracks in the bead plates and intermediate plates without decreasing the rigidity and strength thereof, and improving the sealing function and durability of the metal gasket.

This metal gasket is adapted to offset the stress occurring due to a height difference originally existing in the boundary portions between the lower surface of the cylinder head and the bottom surfaces of the hot plugs or the thermal expansion of the hot plugs or such a height difference increased due to this thermal expansion, prevent the occurrence of stress concentration by avoiding or offsetting and scattering the stress against the bead plates and intermediate plates, and prevent the occurrence of cracks and maintain the sealing function and durability of the gasket without causing a decrease in the rigidity and strength thereof.

Even if height difference-carrying portions occurring in boundary regions between the lower surface of the cylinder head and the bottom surfaces of hot plugs exert a large bead plate-crushing force on a bead plate, or even if stress concentration due to the thermal expansion of the hot plugs or a difference between the thermal expansion coefficient of the hot plugs and that of the cylinder head occurs in these boundary regions, when this metal gasket is tightened between the opposed surfaces of the cylinder head and cylinder block, the recesses mentioned previously, which are opposed to the portions of the bead plate which are pressed by the height difference-carrying portions, and which sink in the direction in which the height difference-carrying portions press the bead plate, serve as crushing force and stress offsetting parts, and the edge portions of the combustion chamber bores in the bead plate are put in the condition of thin plates which receive bending stress. However, since the bending stress occurs in comparatively wide regions, a maximum level of the bending stress becomes low accordingly. Also, since the bending stress is supported in wide regions of the intermediate plate, the stress is distributed from the bead plate to the intermediate plate. Accordingly, the occurrence of stress concentration, and cracks in the bead plate and intermediate plate can be prevented, and the durability of the metal gasket can be improved.

Therefore, unlike a conventional metal gasket, the metal gasket according to the present invention does not encounter a phenomena that, when a pressing force is applied to a bead plate, the bead plate cannot be bent in the direction in which the pressing force is exerted, and directly contacts an intermediate plate, the bead plate and intermediate plate being then forcibly crushed at very narrow regions thereof, i.e., at the portions thereof which are parts of the inner circumferential edge portions of the combustion chamber bores and cross the outer circumferential edge portions of the lower surfaces of the hot plugs, due to the pressing force and its reaction force. In this metal gasket, stress concentration occurring in these portions of the bead plate and intermediate plate is reduced greatly, and cracks does not occur even if a height difference occurs between the surfaces of the hot plugs and cylinder head. Consequently, the sealing performance does not lower, nor does corrosion occur on the surfaces of the bead plate and intermediate plate. This enables bad influence upon the structural rigidity and strength of the metal gasket to be reduced to as great an extent as possible.

In this metal gasket, the contact of the bead plate with the low-rigidity portions, which have a high thermal deformation rate, of the hot plugs is avoided, and the repeated thermal deformation of the low-rigidity portions of the hot plugs does not directly and badly influence as an excessively large load the metal gasket which is exposed to a high-temperature combustion gas at the portions thereof which are in the vicinity of the hot plugs. Unlike a metal gasket in which the combustion chamber bores are not outwardly enlarged, the metal gasket according to the present invention can prevent the occurrence of permanent set in fatigue in the bead plate and intermediate plate, and does not receive a repeated excessively large thermal load acting on the edge portions of the combustion chamber bores. Moreover, cracks do not occur in spite of the repeated thermal stress, and the sealing function and durability of the gasket can be improved. Accordingly, this metal gasket can be manufactured to a simple structure at a low cost, and has excellent sealing performance and a high reliability.

Preferred embodiments of the present invention will now be described hereinbelow by way of example only with reference to the accompanying drawings in which:
Fig. 1 is a plan view showing an embodiment of the metal gasket for swirl chamber type diesel engines according to the present invention;
Fig. 2 is an enlarged plan view showing the portion of the metal gasket of Fig. 1 which includes water hole units;
Fig. 3 is a sectional view of the embodiment of the metal gasket taken along the line A-A in Fig. 2;
Fig. 4 is a sectional view of the metal gasket shown in Figs. 1-3, which is taken along a combustion chamber bore;
Fig. 5 is a sectional view showing the condition of a metal gasket used between the opposed surfaces in a swirl chamber-carrying engine with the positional relation between the gasket and a swirl chamber;
Fig.6 is a plan view showing an example of a conventional metal gasket;
Fig. 7 is a sectional view of the portion of the conventional metal gasket of Fig. 6 which is in the vicinity of a combustion chamber bore;
Fig. 8. is a sectional view of the portion of another example of a conventional metal gasket which is in the vicinity of a combustion chamber body;
Fig. 9 is a sectional view showing an example of non-aligned lower surface of a cylinder head and bottom surface of a hot plug in an engine;
Fig. 10 is a sectional view showing another example of non-aligned lower surface of a cylinder head and bottom surface of a hot plug in an engine;
Fig. 11 is a perspective view schematically showing the stress concentration which an edge portion of the bottom surface of a hot plug imparts to a bead plate; and
Fig. 12 is an explanatory drawing showing examples of cracks occurring in a metal gasket due to the thermal deformation of a hot plug.

The embodiments of the metal gasket according to the present invention used for a swirl chamber type engine, especially, a swirl chamber type diesel engine will now be described with reference to the drawings.

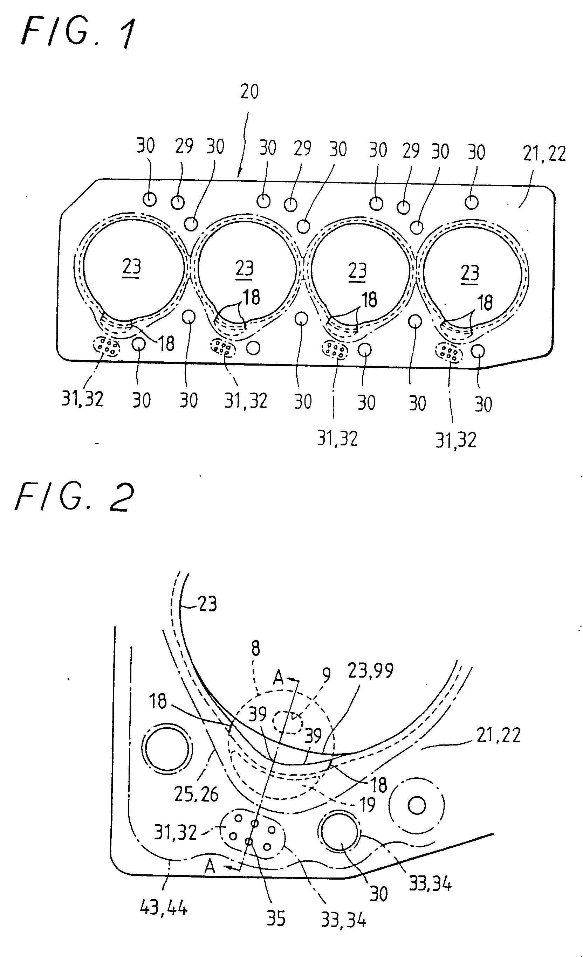

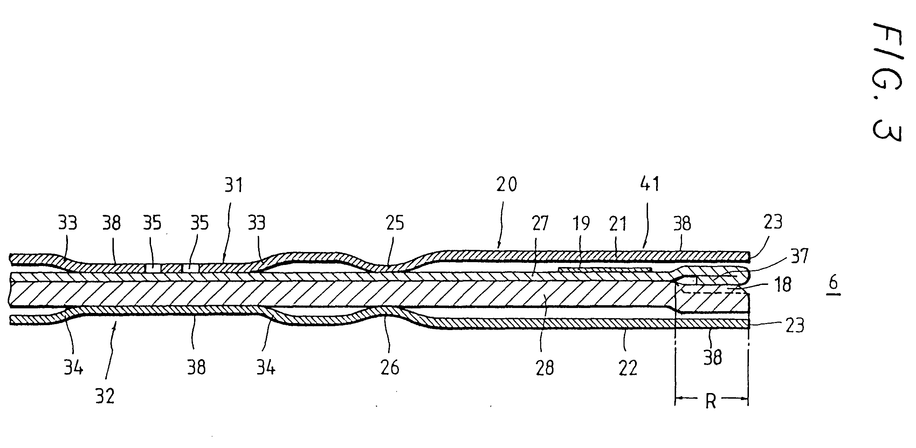

As shown in Figs. 1-4, this metal gasket 20 is used by being held between opposed surfaces 3, 4 of a cylinder head 1 and a cylinder block 2 so as to seal the same surfaces 3, 4. The metal gasket 20 is formed by laminating on each other a bead plate 21 disposed on the side of the cylinder head 1 and comprising an elastic metal plate, and a bead plate 22 disposed on the side of the cylinder block 2 and comprising an elastic metal plate, and interposing two intermediate plates 27, 28 in a sandwiched manner between these bead plates 21, 22. The intermediate plate 27 is formed to a thickness smaller than that of the intermediate plate 28, and has folded portions 37 at the edge parts of combustion chamber bores 23, the intermediate plate 27 being generally in close contact with the intermediate plate 28. The folded portions 37 secure a sealing pressure at the edge portions of the combustion chamber bores 23 when the metal gasket 20 is tightened between the opposed surfaces 3, 4 of the cylinder head 1 and the cylinder block 2. Between the bead plate 21 and intermediate plate 27, shims 19 are interposed. In Fig. 1, the metal gasket 20 is shown as a metal gasket used for a four-cylinder engine but, if the combustion chamber bores are formed correspondingly to the number of the cylinders, the metal gasket can be applied to various types of multicylinder engines.

The bead plates 21, 22 are formed by punching out a metal material of, for example, SUS301, making beads and various kinds of holes on and in the resultant metal material by molding, and thermally treating the resultant metal material so that the tensile strength, elongation and hardness attain predetermined levels. The intermediate plate 27, 28 are formed by punching out a metal material of, for example, SUS304 or SAIC, forming folded portions and beads on the resultant metal material, and heat treating the resultant metal material as necessary.

The bead plates 21, 22 and intermediate plates 27, 28 are provided with combustion chamber bores 23 correspondingly to the combustion chambers formed in the cylinder head 1 and cylinder block 2. These plates are also provided with knock holes and grommet holes in addition to oil holes 29 and bolt holes 30.

The bead plates 21, 22 have on the portions thereof which are around the combustion chamber bores 23 beads 25, 26 projecting toward the intermediate plates 27, 28 and extending to outer greatly distant positions at the portions thereof on the outer side of the hot plugs 8 as shown in Fig. 2. When the metal gasket is in a free state, the bead plates 21, 22 float at the portions thereof which are on the outer side of the beads 25, 26 with respect to the intermediate plates 27, 28. The bead plates 21, 22 have half beads 33, 34 at the portions thereof in which various kinds of holes, such as oil holes 29 and bolt holes 30 are provided, and they are opposed to these holes. The portions on the outer side of these half beads 33, 34 extend to an outer circumferential edge of the gasket via half beads 43, 44.

The bead plates 21, 22 have on the outer surfaces thereof a heat resisting covering material 38 applied thereto which comprises a nonmetallic material having a heat resistance and an oil resistance, such as rubber (for example, fluororubber) and a resin. This heat resisting covering material 78 prevents the metal-to-metal contacting condition of the bead plates 21, 22 with the cylinder head 1 and cylinder block 2, and secures the corrosion resistance, durability and strength of the metal gasket 20.

When the metal gasket 20 is interposed between the cylinder head 1 and cylinder block 2 and tightened by bolts inserted through the bolt holes 30, a tightening surface pressure becomes high at the portions thereof which are very close to the combustion chamber bores 23 since the folded portions 37 increase the thickness of the intermediate plate 27, whereby wider seal portions are formed against the leakage of a combustion gas. At the portions of the intermediate plate 27 which are on the outer side of the folded portions 37, the beads 25, 26 on the bead plates 21, 22 are also compressed, so that they are forcibly pressed against the opposed surfaces 3, 4 and secure seal portions. Owing to these multiplex concentric annular seal portions, a high-temperature high-pressure combustion gas from the combustion chamber bores 23 is prevented from leaking out to these opposed surfaces 3, 4. The non-alignment occurring on the opposed surfaces of the cylinder head 1 and cylinder block 2 is offset by the beads and the layers of costing, and the amount of strain occurring due to the repetition of the suction stroke, compression stroke, explosion stroke and expansion stroke is minimized. Moreover, the edges of various kinds of holes around the beads 25, 26 on the bead plates 21, 22 are pressed forcibly against the opposed surfaces 3, 4 owing to the deformation of the half beads to seal the circumferences of these holes.

The bead plates 21, 22 are provided with full beads 25, 26 which extend from the combustion chamber bores 23 so as to surround at a distance high-temperature regions 41 for the hot plugs 8 and project toward the intermediate plates 27, 28. In the regions in the vicinity of the regions 41 and on the immediately outer side of the beads 25, 26, substantially rectangular and substantially elliptic water hole units 31, 32 distributed in a locally scattered manner are provided. The water hole units 31, 32 are provided in positions in which cooling water passages 11 constituting water jackets in the cylinder head 1 and cooling water passages 12 constituting water jackets in the cylinder block 2 are opened, and inner portions surrounded by the half beads 33 on the bead plate 21 positioned on the side of the cylinder head 1, i.e. the water hole units 31 are provided with a plurality (six in the embodiment of Fig. 1) of small holes 35.

The inner diameter of the small holes 35 can be set to a suitable level in accordance with the engine so as to determine the level of the cooling power, and it is set sufficiently low as compared with that of the small holes provided in other portions of the metal gasket. The sum of the inner areas of the small holes 35 can be set equal to or not less than that of the inner areas of small holes in a case where each water hole unit 31 is formed on the same scale and comprises a single water hole. Since each small hole 35 is of a small size, the small holes can be distributed skillfully even in narrow regions, and the heat can be removed efficiently without causing a decrease in the rigidity and strength of the structure of the regions in which the water hole units 31 are provided. A flow rate of the cooling water may be regulated by providing the intermediate plate 27 with water passing holes communicating with the small holes 35, or the intermediate plate 27 may be provided with a function of a shielding plate for shutting off the cooling water flowing from the water jackets in the cylinder head 1 to those in the cylinder block 2 with such water passing holes not provided.

Referring to Fig. 4, an example of a structure for lessening the stress concentration due to height-different portions 51 and the stress concentration due to a difference between the thermal expansion coefficients of various parts in this metal gasket 20 will now be described.

Out of the upper and lower bead plates 21, 22 and intermediate plate 27, the intermediate plate 27 comprises a flat elastic metal plate. The intermediate plate 28 is formed to a thickness larger than that of the intermediate plate 27. The intermediate plate 28 is specially provided with recesses 18 as stress offsetting means for preventing the occurrence of stress concentration by avoiding or scattering stress. The recesses 18 are provided in the portions which are included in the edge parts extending along the circumferences of the combustion chamber bores 23 in the intermediate plate 28, and which correspond to boundary portions between the bottom surfaces 24 of the hot plugs 8 and the lower surface 3 of the cylinder head 1.

Fig. 4 shows examples of the recesses 18 provided in the intermediate plate 28 which have a trapezoidal circumferential cross-sectional shape, and such recesses 18 can be formed simultaneously with the molding of the intermediate plate 28. The length of each recess 18 in the radial direction of a combustion chamber bore is set to R slightly larger than that of a region in which a folded portion 37 of the intermediate plate 27 is formed, the depth of the recess 18 is reduced gradually in the direction in which the recess 18 becomes farther from the edge portion of the combustion chamber bore 23. Forming the recesses 18 in this manner is preferable for the prevention of the occurrence of cracks. The length R of each recess 18 is, for example, about 3 mm, and a length W thereof in the circumferential direction of the combustion chamber bore 23, for example, about 10 mm, a depth D of the recess 18 being, for example, about 0.03 mm. These numerical values are examples, and can be determined suitably in accordance with the type of an engine designed. The shape in plan of each recess 18 is not limited to a triangular shape. The recess 18 may be formed to various shapes, such as a semicircular shape, a semicircular shape or a rectangular shape as long as it has a gently extending contour. The shape of the recess 18 in vertical cross section with respect to the plane of the intermediate plate 28 also preferably has a gently curved contour. This vertical cross-sectional shape can be not only a trapezoidal shape but also various other shapes including a triangular shape unless they have an acute angle.

When the metal gasket 20 is tightened between the opposed surfaces 3, 4 of a cylinder head 1 and a cylinder block 2, a double sealing effect owing to the folded portions 37 and beads 25, 26 is produced around the combustion chamber bores 23 in the same manner as in an ordinary metal gasket. Even when height different portions 51 occur in boundary regions between the lower surface 3 of the cylinder head 1 and the bottom surfaces 24 of the hot plugs, the occurrence of cracks in the bead plates 21, 22 and intermediate plates 27, 28 which is ascribed to stress concentration based on a difference between thermal expansion coefficients of different parts and to the height different portions 51 is prevented. Namely, even when a forcible crushing force of the height different portions 51 in boundary regions is imparted to the bead plates 21, 22, the portions of the bead plate 21 which are pressed by the height different portions 51 can escape gently into the recesses 18, 18 sinking in the pressing direction of the height different portions 51 since the portions of the intermediate plate 8 which are included in the inner circumferential edge parts of the combustion chamber bores 23, and which correspond to the height different portions 51, are provided with the recesses 18. Due to the escaping of the bead plate 21, the inner circumferential edge portions of the combustion chamber bores 23 in the bead plates 21, 22 are locally put in the condition of thin plates which receive bending stress but bending stress occurs in comparatively wide ranges in accordance with the gently deformed condition, so that a maximum level of the bending stress becomes low, the bending stress being supported on wide regions of the intermediate plates 27, 28. Therefore, the stress is not concentrated on certain portions of the bead plates 21, 22 and intermediate plates 27, 28. Unlike a conventional metal gasket, the metal gasket 20 does not experience stress concentration, and can prevent the occurrence of breakage and cracks.

In this embodiment, the recesses 18 are provided in the inner circumferential edge portions of the combustion chamber bores 23 but the present invention is not limited to this structure. The recess 18 may also be provided in the whole of the boundary region on a line (dotted line B in Fig. 14) between the bottom surface 24 of a hot plug 8 and the opposed surface 3, the lower surface of the cylinder head 1. When the intermediate plate 27 has a sufficient thickness, it may also be provided with recesses correspondingly to those 18 provided in the intermediate plate 28.

## Claims

1. A metal gasket (20) for swirl chamber type engines, interposed in use between a cylinder head (1) provided therein with hot plugs (8) defining an auxiliary chamber (7) and a cylinder block (2) fixed to said cylinder head (1), which comprises a pair of bead plates (21, 22) of elastic metal formed with combustion chamber bores (23) and beads (25, 26) extending along the circumferential edges of said combustion chamber bores (23), and intermediate metal plates (27, 28) arranged interposed between said bead plates (21, 22),
characterized in that said intermediate plates (27, 28) are made at areas (18) confronting bottom surfaces (24) of said hot plugs (8) along the combustion chamber bores (23) so as to relax thermal stresses occurring in the gasket owing to thermal expansion of said hot plugs, wherein the areas (18) to relax the thermal stresses are recesses (18) formed in the regions of said intermediate plates (27 or 28) which are in edge portions extending along the circumferences of said combustion chamber bores (23), and which are opposed to boundary portions between said bottom surfaces (24) of said plugs (8) and a lower surface (3) of said cylinder head (1), whereby said bead plates (21, 22) and the intermediate plates (27, 28) are relieved of stress concentration resulting from said thermal expansion.

2. A metal gasket for swirl chamber type engines according to claim 1, wherein said recesses (18) are formed in one of the opposed surfaces of said intermediate plates (27, 28).

3. A metal gasket for swirl chamber type engines according to claim 1 or claim 2, wherein one (27) of said intermediate plates (27, 28) is provided with folded portions (37) at the edge parts thereof which are close to said combustion chamber bores (23) therein.

4. A metal gasket for swirl chamber type engines according to claim 3, wherein the portions of the other intermediate plate (28) disposed so as to be opposed to said one intermediate plate (27) provided with said folded portions (37) which correspond to said folded portions (37) are bent in the direction opposite to the folding direction of said folded portions (37).

5. A metal gasket for swirl chamber type engines according to any one of claims 1 to 4, wherein shims (19) are inserted in the spaces between such opposed portions of said bead plate (21) and one (27) of said intermediate plates (27, 28) that are in the vicinity of said combustion chamber bores (23).

6. A metal gasket for swirl chamber type engines according to any one of claims 1 to 5, wherein said metal gasket is applied to a diesel engine having said swirl chambers (7) in said cylinder head (1).

## Patentansprüche

1. Metalldichtung (20) für Wirbelkammermotoren, welche im Betrieb zwischen einem Zylinderkopf (1) mit darin vorgesehenen heißen Kerzen (8), die eine Hilfskammer (7) definieren, und einen an dem Zylinderkopf (1) befestigten Zylinderblock (2) eingelegt ist, welche aus einem Paar von Wulstplatten (21, 22) aus elastischem Material, die mit Verbrennungskammerbohrungen (23) und sich um die Verbrennungskammerbohrungen (23) erstreckenden Wülsten (25, 26) ausgebildet sind, und zwischen den Wulstplatten (21, 22) angeordneten Zwischenmetallplatten (27, 28) besteht,
dadurch gekennzeichnet, daß die Zwischenplatten (27, 28) an Bereichen (18) ausgebildet sind, welche Bodenflächen (24) der heißen Kerzen (8) längs der Verbrennungskammerbohrungen (23) gegenüberliegen, um so thermische Belastungen aufzunehmen, welche in der Dichtung aufgrund der thermischen Ausdehnung der heißen Kerzen auftreten, wobei die Bereiche (18) zur Aufnahme der thermischen Belastungen Vertiefungen (18) sind, die in den Bereichen der Zwischenplatten (27 oder 28) ausgebildet sind, welche sich in Wulstabschnitten, die sich längs der Umfänge der Verbrennungskammerbohrungen (23) erstrecken, befinden, und welche den Grenzabschnitten zwischen den Bodenflächen (24) der Kerzen (8) und einer unteren Fläche (3) des Zylinderkopfes (1) gegenüberliegen, wodurch die Wulstplatten (21, 22) und die Zwischenplatten (27, 28) von der Belastungskonzentration entlastet werden, die sich aus der thermischen Ausdehnung ergibt.

2. Metalldichtung für Wirbelkammermotoren nach Anspruch 1, bei welcher die Vertiefungen (18) in einer der gegenüberliegenden Oberflächen der Zwischenplatten (27, 28) ausgebildet sind.

3. Metalldichtung für Wirbelkammermotoren nach Anspruch 1 oder 2, bei welcher eine (27) der Zwischenplatten (27, 28) mit gefalzten Abschnitten (37) an den Randteilen derselben versehen ist, die dicht an den darin enthaltenen Verbrennungskammerbohrungen (23) angeordnet sind.

4. Metalldichtung für Wirbelkammermotoren nach Anspruch 3, bei welcher diejenigen Abschnitte der anderen Zwischenplatte (28) -die so angeordnet ist, daß sie der gefalzte Abschnitte (37) aufweisenden Zwischenplatte (27) gegenüberliegt- welche den Falzabschnitten (37) entsprechen, in die zur Falzrichtung der gefalzten Abschnitte (37) entgegengesetzten Richtung gebogen sind.

5. Metalldichtung für Wirbelkammermotoren nach einem der Ansprüche 1 bis 4, bei welcher Beilagscheiben (19) in die Zwischenräume zwischen solchen gegenüberliegenden Abschnitten der Wulstplatte (21) und einer der Zwischenplatten (27, 28) eingesetzt sind, welche in der Umgebung der Verbrennungskammerbohrungen (23) liegen.

6. Metalldichtung für Wirbelkammermotoren nach einem der Ansprüche 1 bis 5, bei welcher die Metalldichtung in einem Dieselmotor verwendet ist, der Wirbelkammern (7) im Zylinderkopf (1) aufweist.

## Revendications

1. Joint d'étanchéité métallique (20) pour des moteurs de type à chambres de turbulence, interposé, en utilisation, entre une culasse (1) pourvue, à l'intérieur, de bougies chaudes (8) définissant une chambre auxiliaire (7) et un bloc-cylindres (2) fixé à ladite culasse (1), lequel comprend deux plaques nervurées (21, 22) constituées de matière élastique, formées avec des alésages (23) de chambres de combustion et des nervures (25, 26) s'étendant le long des bords circonférentiels desdits alésages (23) de chambres de combustion, et des plaques intermédiaires métalliques (27, 28) agencées interposées entre lesdites plaques nervurées (21, 22),
caractérisé en ce que lesdites plaques intermédiaires (27, 28) sont réalisées au niveau de zones (18) faisant face aux surfaces inférieures (24) desdites bougies chaudes (8) le long des alésages (23) de chambres de combustion, de façon à relaxer des contraintes thermiques apparaissant dans le joint d'étanchéité en raison d'une dilatation thermique desdites bougies chaudes, dans lequel les zones (18) servant à relaxer les contraintes thermiques sont des évidements (18) formés dans les régions desdites plaques intermédiaires (27 ou 28) qui sont situées dans des parties de bord s'étendant le long des circonférences desdits alésages (23) de chambres de combustion, et qui sont opposées à des parties de délimitation entre lesdites surfaces inférieures (24) desdites bougies chaudes (8) et une surface inférieure (3) de ladite culasse (1), lesdites plaques nervurées (21, 22) et lesdites plaques intermédiaires (27, 28) étant ainsi soulagées de la concentration de contrainte résultant de ladite dilatation thermique.

2. Joint d'étanchéité métallique pour des moteurs de type à chambres de turbulence selon la revendication 1, dans lequel lesdits évidements (18) sont formés dans l'une des surfaces opposées desdites plaques intermédiaires (27, 28).

3. Joint d'étanchéité métallique pour des moteurs de type à chambres de turbulence selon la revendication 1 ou la revendication 2, dans lequel l'une (27) desdites plaques intermédiaires (27, 28) est pourvue de parties repliées (37) au niveau de ses parties de bord qui sont à proximité desdits alésages (23) de chambres de combustion qui s'y trouvent.

4. Joint d'étanchéité métallique pour des moteurs de type à chambres de turbulence selon la revendication 3, dans lequel les parties de l'autre plaque intermédiaire (28) disposée de façon à faire face à ladite une plaque intermédiaire (27), pourvue desdites parties repliées (37) qui correspondent auxdites parties repliées (37), sont pliées dans le sens opposé au sens de pliage desdites parties repliées (37).

5. Joint d'étanchéité métallique pour des moteurs de type à chambres de turbulence selon l'une quelconque des revendications 1 à 4, dans lequel on introduit des cales d'épaisseur (19) dans les espaces situés entre les parties opposées de ladite plaque nervurée (21) et l'une, (27), desdites plaques intermédiaires (27, 28) qui sont à proximité desdits alésages (23) de chambres de combustion.

6. Joint d'étanchéité métallique pour des moteurs de type à chambres de turbulence selon l'une quelconque des revendications 1 à 5, dans lequel ledit joint d'étanchéité métallique est appliqué à un moteur diesel comportant lesdites chambres (7) de turbulence dans ladite culasse (1).
